# EUROPÄISCHE PATENTSCHRIFT

(11) **EP 1 722 459 B1**
(45) Veröffentlichungstag und Bekanntmachung des Hinweises auf die Patenterteilung: **26.03.2008**
(21) Anmeldenummer: 05010260.7
(22) Anmeldetag: 11.05.2005
(51) Int. Cl.: H02K 5/16, H02K 5/167, H02K 5/173

(54) **Elektrische Maschine mit Abstützung des Rotors auf einer Stirnseite des Stators**
Electric machine supporting the rotor on the frontside of the stator
Machine électrique avec dispositif pour soutenir le rotor sur le partie frontal du stator

(43) Veröffentlichungstag der Anmeldung: 15.11.2006
(73) Patentinhaber: VDO Automotive AG, 93055 Regensburg (DE)
(72) Erfinder: Baumgartner, Joachim, 97332 Volkach (DE); Buban, Tobias, 97218 Gerbrunn (DE); Nöller, Winfried, 97337 Dettelbach (DE); Podack, Marcus, 97080 Würzburg (DE)

(56) Entgegenhaltungen:
- DE-A1- 19 542 021
- DE-U- 1 928 596
- DE-U1- 29 612 395
- GB-A- 1 297 329
- GB-A- 1 306 633

## Beschreibung

Die Erfindung betrifft eine elektrische Maschine, die einen Stator und einen Rotor aufweist. Eine derartige elektrische Maschine ist im Kraftfahrzeugsektor einsetzbar und kann dort beispielsweise als Fensterhebermotor oder als Pumpenantrieb verwendet werden.

Aus der DE 35 34 381 C2 ist bereits eine Anordnung zur Einstellung des Axialspiels zwischen dem Rotor und dem Stator eines Elektromotors bekannt. Bei dieser bekannten Anordnung ist ein betriebsmäßiges Festlager für die Rotorwelle als Zylinderlager ausgebildet. Zur Einstellung des Axialspiels ist das Zylinderlager relativ zu seiner statorseitigen Lagerschildaufnahme durch einen über der betriebsmäßigen Axialbelastung liegenden Druck axial verschiebbar.

Aus der DE 195 42 021 C2 ist ein aus Kunststoff bestehendes Lagerschild für elektrische Maschinen bekannt. Dieses Lagerschild ist zur Abdeckung eines Wickelkopfes der Statorwicklung der elektrischen Maschine vorgesehen und weist eine ringförmige Aussparung zur Aufnahme des Wickelkopfes auf. Die Rotorwelle der dort beschriebenen Maschine ist über ein Kugellager mit dem Lagerschild verbunden.

Aus der DE 198 39 640 B4 ist ein Motor mit in einer Lageraufnahme mit Axialspieleinstellung für eine Rotorwelle fixierbarem Kalottenlager bekannt. Dieser bekannte Motor ist mit einer ersten, im Bereich des einen axialen Endes des Kalottenlagers anliegenden, entsprechend dem jeweiligen Axialspiel in eine Betriebsendlage axial verschobenen und in dieser in einer Lageraufnahme des Motors fixierten Klemmbrille größerer Federsteifigkeit versehen. Weiterhin weist der bekannte Motor eine zweite, im Bereich des anderen axialen Endes des Kalottenlagers anliegende, entsprechend einem elastischen Andruck des Kalottenlagers gegen die erste Klemmbrille in eine Betriebsendlage axial verschobene und in dieser in der Lageraufnahme fixierte Klemmbrille geringerer Federsteifigkeit auf.

Aus der GB 1 306 633 und der DE 19 28 596 sind weitere elektrische Maschinen bekannt, welche einen Stator, einen Rotor und ein Lager für den Rotor aufweisen. Auch bei diesen Maschinen ist das Rotorlager an einem Lagerschild abgestützt.

Weiterhin ist aus der DE 296 12 395 U1 ein Elektro-Außenläufermotor bekannt, welcher ein auf einer Stirnfläche des Stators abgestütztes Lagertrageelement enthält, welches eine einstückig angeformte Isolier-Endscheibe aufweisen kann.

Der Erfindung liegt die Aufgabe zugrunde, eine elektrische Maschine mit verbesserter Positionierung und Fixierung des Rotors anzugeben.

Diese Aufgabe wird bei einer elektrischen Maschine mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung sind in den abhängigen Ansprüchen angegeben.

Die Vorteile der Erfindung bestehen insbesondere darin, dass die Nachteile bekannter elektrischer Maschinen, bei denen das Rotorlager an einem Lagerschild befestigt ist, beseitigt werden. Diese Nachteile bestehen vor allem darin, dass Lagerschilder im Allgemeinen sperrig sind und spezielle geometrische Formen sowie Toleranzen benötigen. Die Toleranzketten bekannter Lagerschilder sind meist lang, da die Abstützung des Lagerschildes und damit des Rotors über den Außendurchmesser des Stators erfolgt. Dabei ist der Gesamtrundlauf der elektrischen Maschine stets abhängig von der Stanzqualität des Stators. Weiterhin muss bei den bekannten elektrischen Maschinen der magnetische Einfluss der aus Blech bestehenden Lagerschilder aufgrund ihrer Nähe zum Magnetfeld berücksichtigt werden. Diese Nachteile bekannter elektrischer Maschinen werden gemäß der vorliegenden Erfindung im Wesentlichen dadurch beseitigt, dass das Rotorlager an einem Lagerbock abgestützt ist, der seinerseits axial auf einer Stirnfläche des Stators oder auf einer auf einer Stirnseite des Stators positionierten Isolierendscheibe aufliegt. Bei dieser Lösung erfolgt die axiale Abstützung des Rotors nicht unter Verwendung eines Lagerschildes im Außenbereich des Stators, sondern auf einer Stirnfläche des Stators oder auf einer auf einer Stirnseite des Stators positionierten Isolierendscheibe. Auch die radiale Abstützung des Rotorlagers erfolgt nicht im Außenbereich des Stators, sondern - in Radialrichtung gesehen - im Innenbereich desselben unter Verwendung des Lagerbockes, der sich in den Statornuten oder an der Isolierendscheibe der elektrischen Maschine in Radialrichtung abstützt.

Die Erfindung ermöglicht eine Herstellung kompakter elektrischer Maschinen mit im Vergleich zu bekannten Lösungen reduziertem Materialeinsatz. Der Gesamtrundlauf der elektrischen Maschine ist nicht mehr von der Qualität des gestanzten Statorpaketes abhängig. Die bei bekannten Maschinen bestehenden langen Toleranzketten sind bei einer elektrischen Maschine gemäß der Erfindung deutlich verkleinert, so dass eine exaktere Fixierung des Rotors der Maschine erzielt werden kann.

Die exakte Positionierung und Fixierung des Rotors der Maschine wird dadurch weiter verbessert, dass die Innenwand der Isolierendscheibe mit einem Rasthaken versehen wird.

Weitere vorteilhafte Eigenschaften der Erfindung ergeben sich aus der Erläuterung von Ausführungsbeispielen anhand der Figuren. Es zeigt
- Figur 1: eine Schnittdarstellung einer elektrischen Maschine gemäß einem Ausführungsbeispiel für die Erfindung,
- Figur 2: eine perspektivische Darstellung eines Teils der A-Seite der in Figur 1 gezeigten elektrischen Maschine,
- Figur 3: eine vergrößerte Schnittdarstellung eines Teils der B-Seite der in Figur 1 gezeigten elektrischen Maschine und
- Figur 4: eine perspektivische Darstellung eines Teils der A-Seite einer elektrischen Maschine.

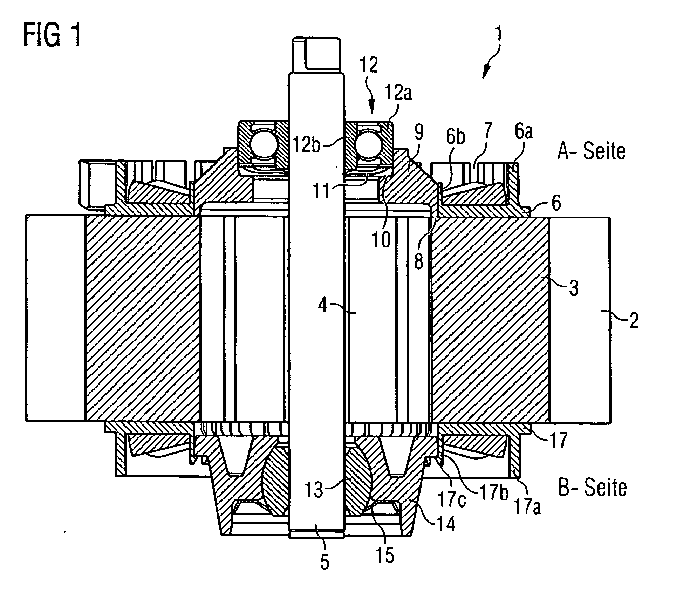

Die Figur 1 zeigt eine Schnittdarstellung einer elektrischen Maschine gemäß einem Ausführungsbeispiel für die Erfindung.

Der dargestellte Elektromotor 1 weist einen Stator auf, der einen Statorkern 2 und eine Statorwicklung 3 enthält. Weiterhin ist der dargestellte Elektromotor mit einem Rotor versehen, dem eine Rotorwelle 5 und ein Rotorkern 4 angehören. Die Rotorwelle ist im A-seitigen Endbereich des Elektromotors in einem Kugellager 12 und im B-seitigen Endbereich des Elektromotors in einem Kalottenlager gelagert, welches eine Kalotte 13 aufweist.

Das Kugellager 12 weist einen Außenring 12a und einen Innenring 12b auf. Der Innenring 12b ist fest mit der Rotorwelle 5 verbunden. Der Außenring 12a stützt sich sowohl in Axialrichtung als auch in Radialrichtung in einer Stufe 10 eines Lagerbockes 9 ab. Zum Ausgleich von Toleranzen kann in Axialrichtung zwischen dem Außenring 12a des Kugellagers 12 und der Stufe des Lagerbockes 9 ein Federring 11 vorgesehen sein.

Der Lagerbock 9 stützt sich in Axialrichtung auf einem Lagersteg 8 ab. Bei diesem Lagersteg 8 handelt es sich um einen Teil der Stirnfläche des Stators bzw. Statorpaketes oder um einen Fortsatz einer auf der A-seitigen Stirnfläche des Stators positionierten Isolierendscheibe 6. Die Isolierendscheibe 6 weist eine Außenwand 6a auf, die aus einer Vielzahl von kreisförmig um die Rotorwelle verlaufenden zahnförmigen Erhebungen mit dazwischenliegenden Zahnzwischenräumen 7 besteht. Weiterhin hat die Isolierendscheibe 6 eine Innenwand 6b, die ebenfalls aus einer Vielzahl von kreisförmig um die Rotorwelle verlaufenden zahnförmigen Erhebungen mit dazwischenliegenden Zahnzwischenräumen besteht. An den Innenseiten der Innenwand 6b stützt sich beim gezeigten Ausführungsbeispiel der Lagerbock 9 in radialer Richtung ab.

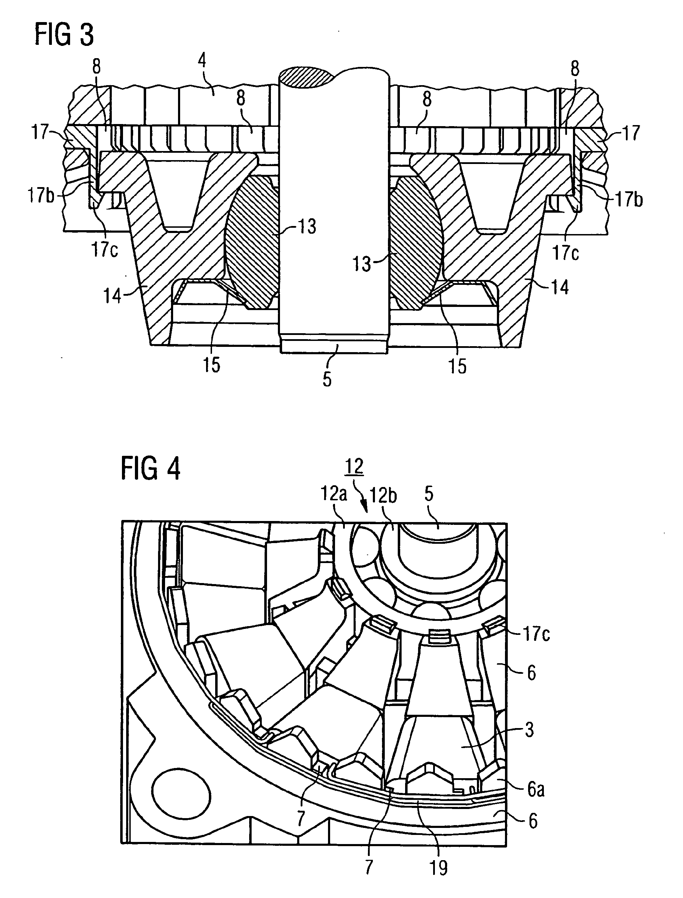

Im B-seitigen Endbereich ist die Rotorwelle 5 des in der Figur 1 dargestellten Elektromotors 1 in einem Kalottenlager gelagert, welches eine Kalotte 13 aufweist. Diese ist ihrerseits in einem Lagerbock 14 gelagert und wird durch eine Klemmbrille 15 in diesen gedrückt. Auch auf der B-seitigen Stirnfläche des Stators ist beim gezeigten Ausführungsbeispiel eine Isolierendscheibe 17 vorgesehen, die eine Außenwand 17a und eine Innenwand 17b aufweist. Der Endbereich der Innenwand 17b der Isolierendscheibe 17 ist - wie unten anhand der Figur 3 erläutert wird - mit Rasthaken 17c versehen, die zur zusätzlichen axialen Fixierung des Lagerbockes 14 und damit der Kalotte 13 dienen. Die Kalotte kann ggf. auch in den Lagerbock eingespritzt sein.

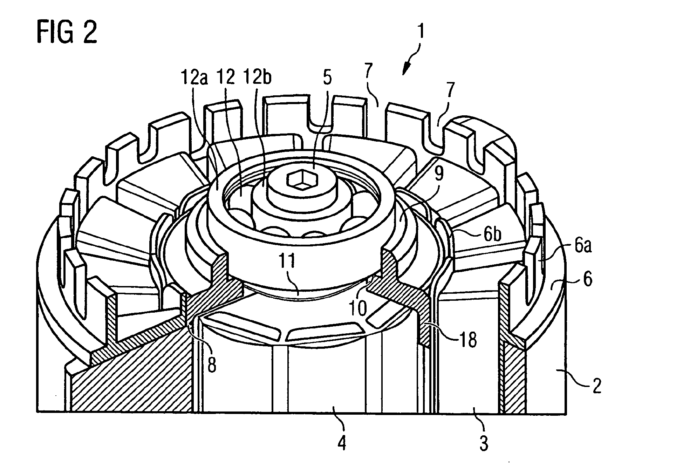

Die Figur 2 zeigt eine perspektivische Darstellung eines Teils der A-Seite des in der Figur 1 gezeigten Elektromotors. Aus dieser Darstellung sind die bereits oben genannten Bestandteile des Motors 1 ersichtlich, nämlich der Statorkern 2, die Statorwicklung 3, der Rotorkern 4, die Rotorwelle 5, die Isolierendscheibe 6, die Zahnzwischenräume 7, der axiale Abstützsteg 8, der Lagerbock 9 für das Kugellager, die Stufe 10 des Lagerbockes 9, der Federring 11 sowie das Kugellager 12 mit dem Außenring 12a und dem Innenring 12b.

Weiterhin geht aus der Figur 2 hervor, dass der Lagerbock 9 vorzugsweise mit Haltefingern 18 versehen ist, die bis in eine jeweils zugehörige Statornut hineinreichen. Mittels dieser Haltefinger erfolgt eine zusätzliche radiale Abstützung des Lagerbockes 9 in den Statornuten. Dadurch wird die Zentrierung des Rotors, der seinerseits über das Kugellager 12 in der Stufe 10 des Lagerbockes 9 abgestützt ist, weiter verbessert. Weiterhin wird durch diese Haltefinger 18 in vorteilhafter Weise eine Verdrehsicherung erreicht, so dass sich im Betrieb des Motors der Lagerbock nicht in unerwünschter Weise relativ zum Stator verdrehen kann.

Die axiale Abstützung des in den Figuren 1 und 2 gezeigten Lagerbockes 9 kann dadurch weiter verbessert werden, dass an den Oberseiten der die Innenwand 6b der Isolierendscheibe 6 bildenden zahnförmigen Erhebungen mit nicht gezeichneten Rasthaken versehen sind, die den Lagerbock 9 und damit den über das Kugellager 12 mit dem Lagerbock gekoppelten Rotor zusätzlich in Axialrichtung fixieren.

Die Figur 3 zeigt eine vergrößerte Schnittdarstellung eines Teils der B-Seite des in Figur 1 dargestellten Elektromotors. Aus dieser vergrößerten Darstellung ist insbesondere ersichtlich, dass die Kalotte 13 des Kalottenlagers von einer Klemmbrille 15 in den Lagerbock 14 gepresst wird. Weiterhin geht aus der Figur 3 hervor, dass der Lagerbock 14 in Axialrichtung auf einem axialen Abstützsteg 8 gelagert ist, bei dem es sich um einen Fortsatz der Isolierendscheibe 17 handelt. Ferner ist aus der Figur 3 ersichtlich, dass die Innenwand 17b der Isolierendscheibe 17 in ihrem Endbereich mit Rasthaken 17c versehen ist, die die axiale Abstützung bzw. Fixierung des Lagerbockes 14 und damit auch der mit dem Lagerbock über das Kalottenlager gekoppelten Rotorwelle 5 verbessern.

Alternativ zu einer axialen Abstützung des Lagerbockes 14 an einem Fortsatz 8 der Isolierendscheibe 17 kann die axiale Abstützung des Lagerbockes 14 auch auf der Stirnfläche des Stators bzw. Statorpaketes selbst erfolgen, wie es bereits oben im Zusammenhang mit dem A-seitigen Kugellager erläutert wurde.

Die Figur 4 zeigt eine perspektivische Darstellung eines Teils der A-Seite einer elektrischen Maschine. Dieses Beispiel unterscheidet sich von dem in der Figur 1 gezeigten Ausführungsbeispiel im Wesentlichen dadurch, dass der Lagerbock und die Isolierendscheibe ein einstückiges Kunststoffformteil 6 bilden, welches zur axialen und radialen Abstützung des Außenrings 12a des Kugellagers und damit auch der Rotorwelle 5 dient. Anstelle eines Kunststoffformteils kann auch ein Formteil aus einem anderen Isoliermaterial verwendet werden.

Aus der Figur 4 sind weiterhin die die Außenwand 6a der Isolierendscheibe bildenden zahnförmigen Erhebungen und die dazwischen vorgesehenen Zahnzwischenräume 7 ersichtlich.

Des Weiteren ist in der Figur 4 der Wickeldraht 19 dargestellt, der durch die Zahnzwischenräume 7 zum jeweils zugehörigen Statorzahn geführt ist und zur Umwicklung desselben im Sinne einer Bildung der Statorwicklung verwendet ist.

Ferner geht aus der Figur 4 hervor, dass die innere Abschlussfläche des mit der Isolierendscheibe ein einstückiges Kunststoffformteil 6 bildenden Lagerbockes an ihren Oberseiten mit Rasthaken 17c versehen ist, die eine zusätzliche axiale Abstützung bzw. Fixierung des Außenrings 12a des Kugellagers 12 und damit der über das Kugellager mit dem Kunststoffformteil 6 gekoppelten Rotorwelle 5 bewirken.

Allen vorstehend beschriebenen Beispielen ist gemeinsam, dass die Abstützung des jeweiligen Rotorlagers nicht über ein Lagerschild im Außenbereich des Stators erfolgt, sondern unter Verwendung eines Lagerbockes auf einer Stirnfläche des Stators oder unter Verwendung einer auf der Stirnfläche des Stators positionierten Isolierendscheibe. Auch die radiale Abstützung erfolgt nicht im Außenbereich des Stators, sondern entweder in den Statornuten oder an einer Fläche der Isolierendscheibe. Dies ermöglicht eine Herstellung von sehr kompakten elektrischen Maschinen mit im Vergleich zum Stand der Technik reduziertem Materialeinsatz. Die Abhängigkeit des Gesamtrundlaufes der elektrischen Maschine ist nicht mehr von der Stanzqualität des Statorpaketes abhängig.

Oben wurde die Erfindung anhand eines Ausführungsbeispiels beschrieben, bei welchem der Stator einen Statorkern und eine Statorwicklung und der Rotor eine Rotorwelle und einen permanentmagnetisch erregten Rotor aufweist, wie es vorzugsweise bei einem bürstenlosen, elektronisch kommutierten Klein-Elektromotor der Fall ist. Die Erfindung ist jedoch prinzipiell auch bei allen anderen Arten von Elektromotoren anwendbar, die eine Ständerbaugruppe, beispielsweise mit einem Blechpaket, und eine Läuferbaugruppe aufweisen. Es kann sich unter anderem um einen Synchronmotor, einen Asynchronmotor, einen bürstenbehafteten Motor, usw., handeln.

## Patentansprüche

1. Elektrische Maschine mit
- einem Stator (2,3),
- einer auf der Stirnseite des Stators positionierten Isolierendscheibe (6,17),
- einem Rotor (4,5), der eine Rotorwelle (5) aufweist, und
- einem Lager (12,13) für den Rotor,
wobei das Lager an einem Lagerbock (9,14) abgestützt ist, der seinerseits axial auf der Stirnfläche des Stators oder auf der Isolierendscheibe aufliegt,
**dadurch gekennzeichnet, dass** die Innenwand (6b,17b) der Isolierendscheibe mit einem Rasthaken (17c) versehen ist, der eine zusätzliche axiale Fixierung des Lagerbockes bewirkt.

2. Elektrische Maschine nach Anspruch 1, **dadurch gekennzeichnet, dass** das Lager (12) in einer Stufe (10) des Lagerbockes (9) positioniert ist und dort sowohl in Axial- als auch in Radialrichtung abgestützt ist.

3. Elektrische Maschine nach Anspruch 1 oder 2, **dadurch gekennzeichnet, dass** sich die vom Lager abgewandte Außenseite des Lagerbockes (9,14) in Radialrichtung an der Innenwand (6b,17b) der Isolierendscheibe (6,17) abstützt.

4. Elektrische Maschine nach einem der vorhergehenden Ansprüche, **dadurch gekennzeichnet, dass** der Lagerbock (9,14) Haltefinger (18) aufweist, die jeweils in eine Nut des Stators eingreifen.

5. Elektrische Maschine nach einem der vorhergehenden Ansprüche, **dadurch gekennzeichnet, dass** das Lager ein Kugellager (12) ist, der Außenring (12a) des Kugellagers im Lagerbock (9) gelagert ist und in Axialrichtung zwischen dem Kugellager und dem Lagerbock ein Federring (11) vorgesehen ist.

6. Elektrische Maschine nach einem der Ansprüche 1 - 4, **dadurch gekennzeichnet, dass** das Lager ein Kalottenlager ist und die Kalotte (13) mittels einer Klemmbrille (15) in den Lagerbock (14) gepresst ist.

7. Elektrische Maschine nach Anspruch 6, **dadurch gekennzeichnet, dass** das Kalottenlager in den Lagerbock eingespritzt ist.

## Claims

1. Electrical machine with
- a stator (2, 3),
- an insulating end disk (6, 17) positioned on the end face of the stator
- a rotor (4, 5) which features a rotor shaft (5), and
- a bearing (12, 13) for the rotor,
With the bearing (12, 13) being supported on a bearing block (9, 14) which in its turn is supported axially on an end face of the stator or on an insulating end disk (6, 17) positioned on an end face of the stator and/or is supported internally in the stator,
**characterized in that** the inner wall (6b, 17b) of the insulating end disk is provided with a latching hook (17c) which effects an additional axial fixing of the bearing block.

2. Electrical machine in accordance with claim 1,
**characterized in that** the bearing (12) is positioned in a step (10) of the bearing block (9) and is supported there both in the axial and also in the radial direction.

3. Electrical machine in accordance with claim 1 or 2,
**characterized in that** the outer side of the bearing block (9, 14) facing away from the bearing is supported in the radial direction on the inner wall (6b, 17b) of the insulating end disk (6, 17) .

4. Electrical machine in accordance with one of the previous claims, **characterized in that** the beating block (9, 14) features retaining fingers (18) which engage in a groove in the stator in each case.

5. Electrical machine in accordance with one of the previous claims, **characterized in that** the bearing is a ball race (12), the outer ring (12a) of the ball race is supported in the bearing block (9) and a spring washer (11) is provided in the axial direction between the ball race and the bearing block.

6. Electrical machine in accordance with one of the claims 1 - 4, **characterized in that** the bearing is a cup bearing and the cup (13) is pressed into the bearing block (14) by means of a spring clip (15).

7. Electrical machine in accordance with claim 6, **characterized in that** the cup bearing is injection-molded into the bearing block.

## Revendications

1. Machine électrique comprenant
- un stator (2, 3),
- une rondelle d'extrémité isolante (6, 17) positionnée sur le côté avant du stator,
- un rotor (4, 5), qui présente un arbre de rotor (5), et
- un palier (12, 13) pour le rotor,
le palier étant soutenu sur un support de palier (9, 14) lequel repose pour sa part axialement sur la surface avant du stator ou sur la rondelle d'extrémité isolante, **caractérisée en ce que** la paroi intérieure (6b, 17b) de la rondelle d'extrémité isolante est dotée d'un crochet d'encliquetage (17c), qui assure une fixation axiale supplémentaire du support de palier.

2. Machine électrique selon la revendication 1, **caractérisée en ce que** le palier (12) est positionné dans un épaulement (10) du support de palier (9) et est ainsi soutenu aussi bien dans le sens axial que dans le sens radial.

3. Machine électrique selon la revendication 1 ou 2, **caractérisée en ce que** le côté extérieur, opposé au palier, du support de palier (9, 14) s'appuie dans le sens radial sur la paroi intérieure (6b, 17b) de la rondelle d'extrémité isolante (6, 17).

4. Machine électrique selon l'une quelconque des revendications précédentes, **caractérisée en ce que** le support de palier (9,14)présente des doigts de retenue (18) qui s'engagent chacun dans une rainure du stator.

5. Machine électrique selon l'une quelconque des revendications précédentes, **caractérisée en ce que** le palier est un roulement à billes (12), la bague extérieure (12a) du roulement à billes est logé dans le support de palier (9) et une bague à ressort (11) est prévue dans le sens axial entre le roulement à billes et le support de palier.

6. Machine électrique selon l'une quelconque des revendications 1 à 4, **caractérisée en ce que** le palier est un palier à calotte et la calotte (13) est pressée au moyen d'une lunette de serrage (15) dans le support de palier (14).

7. Machine électrique selon la revendication 6, **caractérisée en ce que** le palier à calotte est injecté dans le support de palier.
